# EUROPEAN PATENT SPECIFICATION

(11) **EP 2 551 547 B1**
(45) Date of publication and mention of the grant of the patent: **11.10.2017**
(21) Application number: 11759257.6
(22) Date of filing: 15.03.2011
(51) Int. Cl.: F16F 1/02, B05D 7/14, C21D 9/02, C21D 7/06, B05D 3/02, C21D 1/32

(54) **METHOD FOR PRODUCING SPRING**
VERFAHREN ZUR HERSTELLUNG VON FEDERN
PROCÉDÉ DE PRODUCTION DE RESSORT

(30) Priority: 23.03.2010 JP 2010065507
(43) Date of publication of application: 30.01.2013
(73) Proprietor: CHUO HATSUJO KABUSHIKI KAISHA, Midori-ku Nagoya-shi Aichi 458-8505 (JP)
(72) Inventor: HIRATA Yuichi, Nagoya-shi Aichi 458-8505 (JP); UKEI Yoshitaka, Nagoya-shi Aichi 458-8505 (JP); SUZUKI Hidekazu, Nagoya-shi Aichi 458-8505 (JP)
(74) Representative: Winter, Brandl, Fürniss, Hübner, Röss, Kaiser, Polte - Partnerschaft mbB
(86) International application number: PCT/JP2011/056051
(87) International publication number: WO 2011/118451

(56) References cited:
- WO-A1-2011/115110
- WO-A1-2012/014672
- GB-A- 1 235 445
- JP-A- 3 037 434
- JP-A- 55 119 469
- JP-A- 61 025 672
- US-A1- 2007 172 665

## Description

### TECHNICAL FIELD

The present application relates to a method for manufacturing a spring. More specifically, the present application relates to a technology for reducing the time required for a painting step of painting a surface of a spring.

### DESCRIPTION OF RELATED ART

A spring is subjected to a process for improving its durability (e.g., a shot peening process) because the spring wears out due to a load applied repeatedly thereto. Also, the surface of the spring is applied with paint in order to prevent shortening of its life or deterioration of its characteristics caused by corrosion of the spring. A conventional method for manufacturing a spring first performs a process for improving the durability of the spring (e.g., shot peening), then sprays a paint onto a surface of the spring, and then bakes the sprayed paint onto the spring (Maruzen, Co., Ltd. "Spring," 4th edition, P. 522-530, Japan Society of Spring Engineers).

### BRIEF SUMMARY OF INVENTION

### Technical Problem

A shot peening process or other process for improving the durability of a spring enhances the setting of the spring. Thus, it is preferred to perform a heat treatment process for preventing the occurrence of setting in the spring. The time required for the work can be reduced by performing both a heat treatment process for baking the sprayed paint onto the surface of the spring (i.e., a baking process) and a heat treatment process for preventing the occurrence of spring setting (i.e., a low temperature annealing process subsequent to a shot peening process ("low temperature annealing process," hereinafter).

Nevertheless, the paint to be sprayed onto the surface of the spring has a unique baking finish temperature range within which the baking process needs to be carried out. Therefore, performing both the baking process and the low temperature annealing process confines the processing temperature in the baking finish temperature range of the paint. The baking finish temperature range is usually lower than a temperature that is appropriate for performing the low temperature annealing process. The problem, therefore, is that performing both the baking process and the low temperature annealing process increases the length of time required for the heat treatment processes.

An object of the present application is to provide a technology capable of performing both the baking process and the low temperature annealing process and at the same time reducing the time required for performing these processes.

### Solution to the Technical Problem

A method for manufacturing a spring, which is disclosed in claim 1 of the present invention.

In this manufacturing method, the spring is heated until the temperature thereof reaches the predetermined temperature. While the heated spring is cooled, the paint is sprayed onto the surface of the spring, and the sprayed paint is baked onto the spring. By performing these steps, the spring can be heated to a temperature higher than a baking finish temperature range of the paint, without confining the predetermined temperature therein. Thus, an appropriate low temperature annealing process can be performed on the spring. Even when the spring is heated to a temperature exceeding the baking finish temperature range, the surface of the spring can appropriately be painted by spraying the paint onto the surface of the spring after the temperature of the spring drops to the baking finish temperature range. Consequently, the heat treatment performing both the baking process and the low temperature annealing process can be performed within a short period of time.

According to the manufacturing method described above, it is preferred that the predetermined temperature be 190 to 300°C. When the predetermined temperature is less than 190°C, the low temperature annealing process needs to be performed for a long period of time in order to achieve a sufficient result, otherwise the setting resistance of the spring worsens. However, when the predetermined temperature exceeds 300°C, the low temperature annealing process is performed beyond necessity, deteriorating the durability of the spring.

According to the manufacturing method described above, it is preferred that the predetermined temperature be higher than an upper limit of the baking finish temperature range of the paint. Setting the predetermined temperature to be above the upper limit of the baking finish temperature range of the paint can reduce the time required for the baking process to complete.

It is preferred that, when the predetermined temperature exceeds the upper limit of the baking finish temperature range of the paint, a cooling rate for cooling the spring be 0.01 to 13.00 °C/sec. It is more preferred that the cooling rate be 0.50 to 4.50 °C/sec.

### BRIEF DESCRIPTION OF DRAWINGS

FIG. 1 is a flowchart showing a part of a step of manufacturing a spring according to an embodiment;
FIG. 2 is a diagram showing upper and lower limits of a processing time period obtained when performing a low temperature annealing process at a constant temperature;
FIG. 3 is a diagram schematically showing an example of a temperature profile obtained in steps S12 to S16;
FIG. 4 is a diagram schematically showing another example of the temperature profile;
FIG. 5 is a diagram schematically showing yet another example of the temperature profile; and
FIG. 6 is a diagram schematically showing yet another example of the temperature profile.

### DETAILED DESCRIPTION OF INVENTION

A method for manufacturing a spring according to an embodiment is now described. The present embodiment describes an example of manufacturing a stabilizer bar, a type of a spring. The stabilizer bar has a substantially straight linear part and an arm part provided at either end of the linear part. When the stabilizer bar is installed in a vehicle, the arm parts on both ends of the stabilizer bar are fixed to the right and left wheels, whereas the linear part is fixed to the vehicle body. This configuration can prevent the vehicle body from rolling when turning, improving the traveling safety of the vehicle.

The method for manufacturing the stabilizer bar has a forming step of bending a steel material while the steel material is cold, warm, or hot, to form the steel material into the shape of a stabilizer bar, a heat treatment step of heat-treating the steel material formed into the shape of a stabilizer bar, a shot peening step of shot-peening a surface of the heat treated steel material, and a painting step of painting the surface of the shot-peened steel material. The forming step and the heat treatment step can be executed in the same manner as in the prior art; thus, the detail explanations thereof are omitted here. The shot peening step and the painting step are described hereinafter in detail.

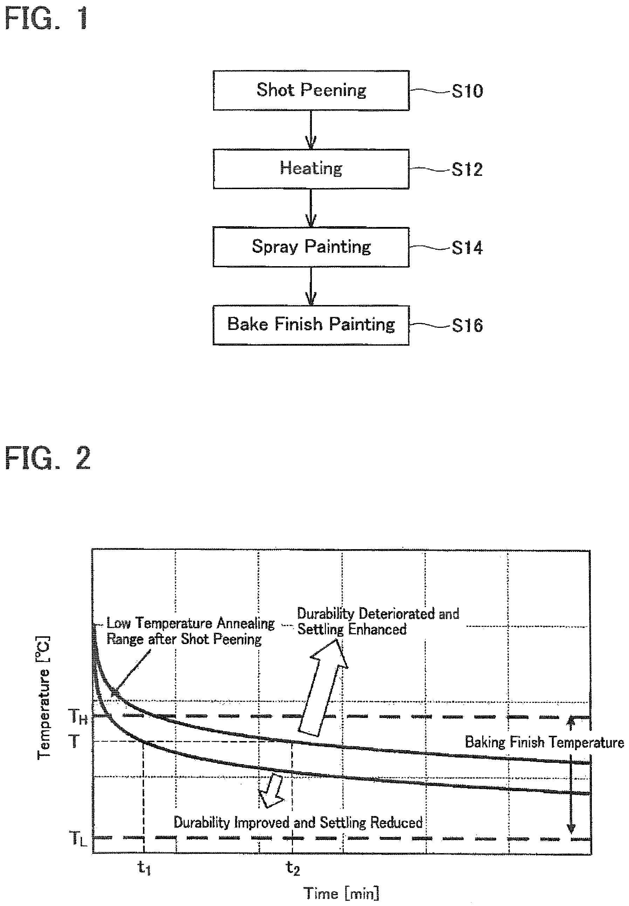

As shown in FIG. 1, first, the surface of the stabilizer bar that is heat-treated by the heat treatment step is subjected to shot peening (S10). Performing shot peening on the surface of the stabilizer bar can apply compressive residual stress to the stabilizer bar, improving the durability of the stabilizer bar. Further, surface oxide scales which are formed on the surface of the stabilizer bar in the heat treatment step that is performed subsequent to the forming step are removed. This can improve the appearance of the paint on the surface of the stabilizer bar. The shot peening step of step S10 can be performed in the same manner as in the prior art. In step S10, a honing process, a blasting process, or other process may be performed in place of the shot peening step.

Next, the stabilizer bar that is subjected to the shot peening step in step S10 is heated (S12). In this heating process, the stabilizer bar is heated until the surface temperature thereof reaches a predetermined temperature. The predetermined temperature is preferably 190 to 300°C. When the predetermined temperature is less than 190°C, a baking process of step S16, which is described hereinafter, needs to be performed for a long period of time in order to achieve a sufficient result from a low temperature annealing process. When the low temperature annealing process is not performed sufficiently, a processing strain that occurs during the shot peening step in step S10 and has a negative effect on the performance of the stabilizer bar cannot be released sufficiently, worsening the setting resistance of the stabilizer bar. However, when the predetermined temperature exceeds 300°C, the low temperature annealing process is performed beyond necessity after the completion of the baking process of step S16. When the low temperature annealing process is performed beyond necessity, the compressive residual stress applied to the stabilizer bar in the shot peening step of step S10 is released more than necessary, deteriorating the durability of the stabilizer bar.

The heating process of step S12 is performed prior to the painting process of the stabilizer bar. Thus, the predetermined temperature can be set at a temperature exceeding an upper limit of a baking finish temperature range of the paint. Heating the stabilizer bar to exceed the upper limit of the baking finish temperature range of the paint in step S12, can provide a greater effect of the low temperature annealing process in the heating step of step S12, and, consequently, reduce the time period required for completing the low temperature annealing process. Note that, even when the predetermined temperature exceeds the upper limit of the baking finish temperature range of the paint, no problem occurs because the paint is sprayed onto the surface of the stabilizer bar in the present embodiment after the surface temperature of the stabilizer bar drops to the baking finish temperature range.

In the heating step of step S12, after the surface temperature of the stabilizer bar increases to the predetermined temperature, the stabilizer bar may be heated so as to retain the surface temperature thereof at the predetermined temperature for a certain period of time, so that the surface temperature of the stabilizer bar can be uniform. In this case, the period of time for which the surface temperature is retained at the predetermined temperature can be approximately 0 to 60 seconds. Setting this retention time for 60 seconds or lower can prevent lengthening of the time period required for the heating step.

Various heating methods can be adopted as the heating step of step S12 described above. However, it is preferred to adopt a heating method capable of performing rapid heating in order to execute the heating step of step S12 in a short time. Examples of the rapid heating method include high-speed hot air heating (wind speed: 10 m/s or higher), an induction heating, infrared heating, and electrical heating.

Once heating of the stabilizer bar in step S12 is finished, the paint is sprayed onto the surface of the stabilizer bar (S14). For example, spray painting for spraying a mist of paint with high-pressure air can be performed in order to spray the paint. The spray painting can be performed under the conditions that, for example, a wind speed is 0.5 to 1.0 m/min and an injection distance is 50 to 200 mm. The paint can be sprayed onto the surface of the stabilizer bar by electrostatic painting. The electrostatic painting can be executed under the conditions that, for example, an electrical charge is 40 to 100 kV, the wind speed is 0.5 to 1.0 m/min, and an air volume is 50 to 100 m³/min. A painted film of uniform thickness can be formed by carrying out the painting step under such conditions.

The spraying the paint in step S14 is performed after the surface temperature of the stabilizer bar falls within the baking finish temperature range of the paint. Therefore, when the surface temperature of the stabilizer bar exceeds the upper limit of the baking finish temperature range in step S12, the stabilizer bar is cooled until the surface temperature thereof drops to the baking finish temperature range, and thereafter the paint is sprayed onto the surface of the stabilizer bar.

Once spraying the paint onto the surface of the stabilizer bar is finished, the sprayed paint is baked on the surface of the stabilizer bar (S16). The heat that is applied to the stabilizer bar in the heating step of step S12 is used in order to bake the paint. Furthermore, in step S16, the surface temperature of the stabilizer bar is controlled to drop in accordance with a predetermined cooling pattern. Consequently, the surface temperature of the stabilizer bar is maintained within the baking finish temperature range of the paint, and the low temperature annealing process and the paint baking process are carried out on the stabilizer bar.

In other words, in the present embodiment, the predetermined temperature of step S12 and the cooling pattern of steps S14 and S16 are set such that the low temperature annealing process providing an appropriate effect is performed on the stabilizer bar. Specifically, the low temperature annealing process is performed on the stabilizer bar both during the heating process of step S12 and during the painting processes of steps S14 and S16. Therefore, when the predetermined temperature of step S12 is high, a great level of low temperature annealing effect is realized in step S12. This means that a great level of low temperature annealing effect does not have to be realized in steps S 14 and S16. Thus, the low temperature annealing effect can be kept at a suitable level by increasing the cooling rate in steps S14 and S16 and/or reducing the processing time period required for step S16. When, conversely, the predetermined temperature of step S12 is low, a low level of low temperature annealing effect is realized in step S12. This means that a great level of low temperature annealing effect needs to be realized in steps S 14 and S16. Thus, a sufficient level of low temperature annealing effect is realized by reducing the cooling rate in steps S 14 and S16 and/or lengthening the processing time period required for step S16.

In the present embodiment, the processing time period required for step S16 can be reduced by increasing the predetermined temperature of step S12. This is illustrated specifically in FIG. 2. In FIG. 2, an upper curve shows a maximum low temperature annealing time period obtained when the processing temperature is constant, and a lower curve shows a minimum low temperature annealing time period obtained when the processing temperature is constant. A temperature T_{H} shows a maximum baking finish temperature, and a temperature T_{L} shows a minimum baking finish temperature. For example, when the processing temperature for the low temperature annealing process is T, the maximum low temperature annealing time period is t₂ and the minimum low temperature annealing time period is t₁. In other words, when the processing temperature for the low temperature annealing process is T, the processing time period has to be within a range of t₁ to t₂. When the processing time period exceeds t₂, an excessive low temperature annealing effect is realized, which improves the setting resistance of the stabilizer bar but worsens the durability of the stabilizer bar. On the other hand, when the processing time period is less than t₁, the low temperature annealing effect becomes insufficient, which improves the durability of the stabilizer bar but worsens the setting resistance of the stabilizer bar. As is clear from FIG. 2, the higher the processing temperature is, the shorter the time period required for the low temperature annealing process. Especially at a temperature exceeding the upper limit T_{H} (e.g., 240°C) of the baking finish temperature range, a desired low temperature annealing effect can be realized within an extremely short period of time. Therefore, increasing the predetermined temperature of step S12 can provide a great level of low temperature annealing effect in step S12 and reduce the processing time periods of steps S 14 and S16.

Because the paint needs to be baked onto the surface of the stabilizer bar in step S16, the surface temperature of the stabilizer bar falls within the baking finish temperature range of the paint, only for a period of time required for baking the paint. Therefore, an upper limit of the cooling rate can be determined from the time period required for completing the baking process. For example, in a case where the surface temperature of the stabilizer bar decreases linearly, when the baking finish temperature range is 240 to 160°C and the baking time period is 20 minutes, the maximum cooling rate is 80°C/20 minutes (i.e., 240 °C/hr). Therefore, the cooling rate is determined to be lower than 240 °C/hr.

Moreover, the cooling rate of the stabilizer bar in step S16 can be controlled by, for example, disposing the stabilizer bar in a hot-blast stove and adjusting the temperature of hot air supplied to the hot-blast stove. In this case, it is preferred that the cooling rate for cooling the stabilizer bar be 0.01 to 13.00 °C/sec. This is because, when the cooling rate is lower than 0.01 °C/sec, the processing time period required for the low temperature annealing process increases. Another reason is that, when the cooling rate is higher than 13.00 °C/sec, it becomes difficult to secure a sufficient amount of time for baking the paint. From the perspective of improving the paint quality, it is preferred that the cooling rate be 0.50 to 4.50 °C/sec. Fluctuations of the surface temperature obtained upon painting can be made substantially harmless, by painting the surface of the stabilizer bar within this cooling rate range.

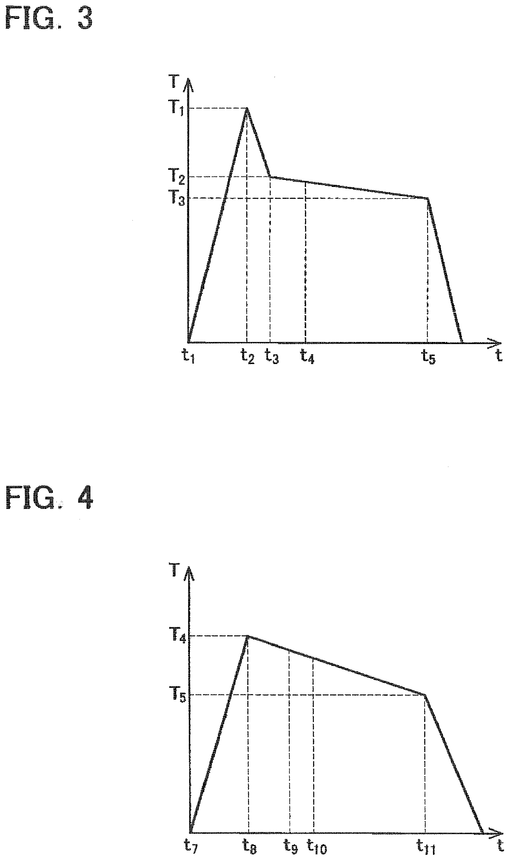

Temperature profiles shown in, for example, FIGS. 3 to 6 can be adopted as the temperature profile (a heating pattern and the cooling pattern) obtained in steps S12 to S16. In the example shown in FIG. 3, first, the stabilizer bar is heated until the surface temperature thereof reaches T₁ (t₁ to t₂). Next, the stabilizer bar is cooled at a relatively high cooling rate (temperature reduction ratio) until the surface temperature thereof becomes T₂ (the upper limit of the baking finish temperature range of the paint (T_{H} in the example shown in FIG. 2)) (t₂ to t₃). Subsequently, the paint is sprayed onto the surface of the stabilizer bar (t₃ to t₄). Once the paint is sprayed onto the surface of the stabilizer bar, the baking process is carried out only for a predetermined processing time period while controlling the cooling rate such that the surface temperature of the stabilizer bar is maintained within the baking finish temperature range (t₄ to t₅). The cooling rate for cooling the stabilizer bar (temperature reduction ratio), which is obtained during the time period t₃ to t₅ between when the paint is sprayed onto the surface of the stabilizer bar and when the paint is baked, becomes lower than the cooling rate for cooling the stabilizer bar between the time t₂ to time t₃. In the temperature profile shown in FIG. 3, the stabilizer bar is heated until the surface temperature thereof becomes T₁ that exceeds the upper limit of the baking finish temperature range, realizing a higher level of the effect of the low temperature annealing process performed between t₁ and t₃. Consequently, the processing time period t₁ to t₅ that is required for painting the surface of the stabilizer bar can be reduced.

In the example shown in FIG. 4, first, the stabilizer bar is heated until the surface temperature thereof reaches T₄ (t₇ to t₈). Next, the stabilizer bar is cooled such that the surface temperature thereof decreases at a constant cooling rate (temperature reduction ratio) (t₈ to t₁₁). When the surface temperature of the stabilizer bar falls within the baking finish temperature range of the paint while the stabilizer bar is cooled, the paint is sprayed onto the surface of the stabilizer bar (t₉ to t₁₀). Subsequently, the paint sprayed onto the surface of the stabilizer bar is baked (t₁₀ to t₁₁). As with the example shown in FIG. 3, the temperature profile of FIG. 4, too, can reduce the processing time period t₈ to t₁₁ required for painting the surface of the stabilizer bar.

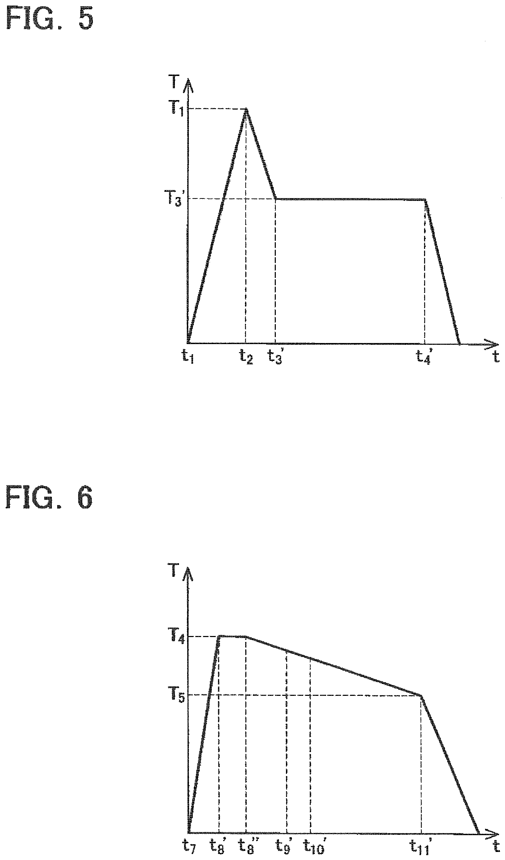

The temperature profile shown in FIG. 3 can be changed to obtain the temperature profile shown in FIG. 5. The temperature profile shown in FIG. 5 is different from the temperature profile shown in FIG. 3 in that the cooling rate (temperature reduction ratio) for cooling the stabilizer bar becomes 0 (i.e., the surface temperature of the stabilizer bar is kept constant) during the time period t₃ to t₄ between when the paint is sprayed onto the surface of the stabilizer bar and when the paint is baked. In such a temperature profile as well, the stabilizer bar is heated until the surface temperature thereof becomes T₁ that exceeds the upper limit of the baking finish temperature range; thus, the processing time period t₁ to t₄ required for painting the surface of the stabilizer bar can be reduced.

In addition, the temperature profile shown in FIG. 4 can be changed to obtain the temperature profile shown in FIG. 6. The temperature profile shown in FIG. 6 is different from the temperature profile shown in FIG. 4 in that after the stabilizer bar is heated until the surface temperature thereof becomes T₄ (t₇ to t₈), the surface temperature of the stabilizer bar is kept at T₄ only for a certain period of time (t₈ to t_{8'}). Such a temperature profile can make the surface temperature of the stabilizer bar uniform and improve the paint quality of the stabilizer bar. Note that the time period (t₈ to t_{8'}) shown in FIG. 6, which is required for heating the stabilizer bar until the surface temperature thereof becomes uniform, can be provided in each of the temperature profiles shown in FIGS. 3 to 5.

As described in detail above, the method for manufacturing a stabilizer bar according to the present embodiment heats the stabilizer bar until the surface temperature thereof becomes higher the upper limit of the baking finish temperature range of the paint prior to the painting process, sprays the paint onto the surface of the stabilizer bar while cooling the stabilizer bar, and bakes the sprayed paint onto the surface of the stabilizer bar. Because the low temperature annealing process is performed on the stabilizer bar, even while the stabilizer bar is heated until the surface temperature thereof becomes higher than the upper limit of the baking finish temperature range of the paint, the effect of low temperature annealing that needs to be performed when baking the paint can be lowered. As a result, the processing time period required for painting the surface of the stabilizer bar can be reduced.

The present embodiments are described above in detail, but these examples are merely illustrative and place no limitation on the scope of the patent claims. The technology described in the patent claims also encompasses various changes and modifications to the specific examples described above.

For example, the above embodiment has described the method for manufacturing a stabilizer bar; however, the technology according to the present application can be applied to a method for manufacturing a spring other than a stabilizer bar. Particularly, the technology according to the present application can favorably be applied to a spring on which a shot peening process and painting process are performed. Examples of such a spring include a coil spring and a torsion bar.

In addition, in order to make the paint quality uniform, the surface temperature of the spring may be measured using a thermograph and the paint may be applied to the spring, starting from the section, the surface temperature of which reaches an appropriate temperature. Unevenness in paint application can be prevented by keeping the temperature of this section constant, the section being applied with the paint first, so that the paint quality can be improved.

Furthermore, it is to be understood that the technical elements described in the present specification and the drawings exhibit technical usefulness solely or in various combinations thereof and shall not be limited to the combinations described in the claims at the time of filing. The techniques illustrated in the present specification and the drawings are to achieve a plurality of objectives at the same time, and technical usefulness is exhibited by attaining any one of such objectives.

## Claims

1. A method for manufacturing a spring, the method comprising:
conducting a shot peening to the surface of the spring
heating the shot peened spring until a temperature of the spring reaches a predetermined temperature, the predetermined temperature being higher than an upper limit of a baking finish temperature range of the paint; and
spraying paint to the surface of the spring after the surface temperature of the spring falls within the baking finish temperature range of the paint, and
baking the sprayed paint onto the surface of the spring, wherein
i) the surface temperature of the spring continuously decreases from completion of the heating step until completion of the baking step, or
ii) the surface temperature of the spring continuously decreases from completion of the heating step until completion of the spraying step and then is maintained constant during the baking step, and
the predetermined temperature is set and the heating and cooling are performed such that a predetermined low temperature annealing is conducted on the spring during the heating step and painting step, wherein the predetermined temperature is 190 to 300 °C, and wherein a cooling rate of the spring in the painting is 0.01 to 13.00 °C /sec.

2. The method as in claim 1, wherein the cooling rate of the spring is 0.50 to 4.50 °C /sec.

3. The method as in any one of claims 1 and 2, further comprising:
conducting a shot peening to the surface of the spring before the heating, wherein the predetermined low temperature annealing is a process for preventing setting of the spring.

## Patentansprüche

1. Verfahren zur Herstellung einer Feder, wobei das Verfahren aufweist:
Durchführen einer Kugelstrahlung der Oberfläche der Feder,
Erwärmen der kugelgestrahlten Feder bis die Temperatur der Feder eine vorbestimmte Temperatur erreicht, wobei die vorbestimmte Temperatur höher als eine obere Grenze eines Back-Endtemperaturbereichs der Farbe ist; und
Sprühen von Farbe auf die Oberfläche der Feder, nachdem die Oberflächentemperatur der Feder innerhalb des Back-Endtemperaturbereichs der Farbe fällt, und
Backen der gesprühten Farbe auf die Oberfläche der Feder, wobei
i) die Oberflächentemperatur der Feder ab der Beendigung des Erwärmungsschrittes bis zur Beendigung des Backschrittes kontinuierlich abnimmt, oder
ii) die Oberflächentemperatur der Feder ab der Beendigung des Erwärmungsschritts bis zur Beendigung des Sprühschrittes kontinuierlich abnimmt und dann während des Backschrittes konstant gehalten wird, und
die vorbestimmte Temperatur so eingestellt wird und das Erwärmen und Abkühlen so durchgeführt wird, dass ein vorbestimmtes Tieftemperaturausglühen während des Erwärmungsschritts und des Sprühschrittes an der Feder durchgeführt wird, wobei die vorbestimmte Temperatur 190 bis 300 °C beträgt und wobei eine Abkühlrate der Feder in der Farbe 0,01 bis 13,00 °C/sek ist.

2. Verfahren nach Anspruch 1, wobei die Abkühlrate der Feder 0,50 bis 4,50 °C/sek beträgt.

3. Verfahren nach einem der Ansprüche 1 und 2, ferner umfassend,
Durchführen einer Kugelstrahlung der Oberfläche der Feder vor dem Erwärmen, wobei das vorbestimmte Tieftemperaturausglühen ein Prozess zum Verhindern von Verstellung der Feder ist.

## Revendications

1. Procédé de fabrication d'un ressort, le procédé comprenant :
effectuer un grenaillage sur la surface du ressort
chauffer ressort grenaillé jusqu'à ce qu'une température du ressort atteigne une température prédéterminée, la température prédéterminée étant plus élevée qu'une limite supérieure d'une plage de températures de finition au four de la peinture ; et
pulvériser une peinture sur la surface du ressort après que la température de surface du ressort tombe dans la plage de températures de finition au four de la peinture, et
cuire la peinture pulvérisée sur la surface du ressort, dans lequel
i) la température de surface du ressort diminue en continu depuis achèvement de l'étape de chauffage jusqu'à achèvement de l'étape de cuisson, ou
ii) la température de surface du ressort diminue en continu depuis achèvement de l'étape de chauffage jusqu'à l'achèvement de l'étape de pulvérisation puis est maintenue constante pendant l'étape de cuisson, et
la température prédéterminée est fixée et le chauffage et le refroidissement sont réalisés de sorte qu'un recuit à basse température prédéterminée soit conduit sur le ressort pendant l'étape de chauffage et l'étape de peinture, dans lequel la température prédéterminée est entre 190 et 300 °C, et dans lequel une vitesse de refroidissement du ressort lors de la peinture est entre 0,01 et 13,00 °C/s.

2. Procédé selon la revendication 1, dans lequel la vitesse de refroidissement du ressort est entre 0,50 et 4,50 °C/s.

3. Procédé selon l'une quelconque des revendications 1 et 2, comprenant en outre :
effectuer un grenaillage sur la surface du ressort avant le chauffage, dans lequel le recuit à basse température prédéterminée est un processus pour empêcher un durcissement du ressort.
